# EUROPÄISCHE PATENTANMELDUNG

(11) **EP 4 660 030 A1**
(43) Veröffentlichungstag der Anmeldung: **10.12.2025**
(21) Anmeldenummer: 25176273.8
(22) Anmeldetag: 14.05.2025
(51) Int. Cl.: B60T 13/74, F16D 55/226, F16D 65/18, F16D 121/24, F16D 125/40, F16D 125/70, F16D 127/08

(54) **ELEKTROMECHANISCHER BREMSAKTUATOR FÜR EINE BREMSE EINES FAHRZEUGS**

(30) Priorität: 06.06.2024 DE 102024115788
(71) Anmelder: ZF CV Systems Global GmbH, 3006 Bern (CH)
(72) Erfinder: REINERS, Jan, 30163 Hannover (DE); BEIER, Peter, 31515 Wunstorf (DE)
(74) Vertreter: Rabe, Dirk-Heinrich

(57) **Zusammenfassung**

Die Erfindung bezieht sich auf einen elektromechanischer Bremsaktuator (10) für eine Bremse eines Fahrzeugs (100), insbesondere für eine Nutzfahrzeug-Scheibenbremse (1), mit einem im Wesentlichen translatorisch bewegbaren Bremsstößel (14) zum Übertragen einer Druckkraft (F) in Richtung eines Bremsbelags (6, 6'), einem Antriebsmittel (16), das dazu eingerichtet ist, eine Antriebsbewegung (A), vorzugsweise eine rotatorische Antriebsbewegung, zu erzeugen, und einem Koppelgetriebe (18), welches das Antriebsmittel (16) und den Bremsstößel (14) miteinander wirkverbindet und dazu eingerichtet ist, die Antriebsbewegung (A) des Antriebsmittels (16) in eine Verstellbewegung (B) des Bremsstößels (14) zu wandeln.

Das Koppelgetriebe (18) weist ein mit dem Bremsstößel (14) in Anlage stehendes Koppelglied (38) auf, das entlang mindestens einer Kurvenbahn (40, 60) beweglich geführt und dazu eingerichtet ist, die auf das Koppelglied (38) wirkende Antriebsbewegung (A) mit einer im Wesentlichen gleichmäßigen Antriebsgeschwindigkeit (A') in die Verstellbewegung (B) des Bremsstößels (14) mit einer abschnittsweise ungleichmäßigen Verstellgeschwindigkeit (B') zu wandeln.

## Beschreibung

Die Erfindung betrifft einen elektromechanischen Bremsaktuator für eine Bremse eines Fahrzeugs, insbesondere für eine Nutzfahrzeug-Scheibenbremse, mit einem im Wesentlichen translatorisch bewegbaren Bremsstößel zum Übertragen einer Druckkraft in Richtung eines Bremsbelags, einem Antriebsmittel, das dazu eingerichtet ist, eine Antriebsbewegung, vorzugsweise eine rotatorische Antriebsbewegung, zu erzeugen, und einem Koppelgetriebe, welches das Antriebsmittel und den Bremsstößel miteinander wirkverbindet und dazu eingerichtet ist, die Antriebsbewegung des Antriebsmittels in eine Verstellbewegung des Bremsstößels zu wandeln.

Des Weiteren betrifft die Erfindung eine Scheibenbremse für ein Fahrzeug, insbesondere eine Nutzfahrzeug-Scheibenbremse, mit einer Bremsscheibe, einem Bremssattel, mindestens einem am Bremssattel beweglich aufgenommenen Bremsbelag zum Erzeugen einer Bremswirkung mittels Andrücken an die Bremsscheibe, einem schwenkbar gelagerten Bremshebel zum Andrücken des mindestens einen Bremsbelags an die Bremsscheibe, und einem elektromagnetischen Bremsaktuator, der mit dem Bremssattel gekoppelt und dazu eingerichtet ist, eine Verstellbewegung des Bremshebels zu bewirken.

Elektromechanische Bremsaktuatoren und Bremssysteme mit solchen Bremsaktuatoren sind im Stand der Technik bekannt und sollen vermehrt anstelle von fluidisch aktuierten Bremssystemen in der Fahrzeugtechnik eingesetzt werden. Speziell durch die Elektrifizierung der Bremssysteme soll eine Energieeinsparung erreicht und zudem die Montage im Fahrzeug, aufgrund einer geringeren Anzahl an Komponenten bzw. durch eine Minimierung der Verrohrung oder den Verzicht von Speichern, vereinfacht werden. Zum Betätigen solch elektromechanischer Bremssysteme, insbesondere zum Bewegen eines Bremsbelags gegen einen drehbaren, zu verzögernden Bremskörper, wie beispielsweise eine Bremsscheibe, weisen die bekannten Bremssysteme einen elektromechanischen Bremsaktuator auf.

Bekannte elektromechanische Bremsaktuatoren für eine Bremse eines Fahrzeugs umfassen mindestens einen im Wesentlichen translatorisch bewegbaren Bremsstößel zum Übertragen einer Druckkraft in Richtung eines Bremsbelags, der sich im Betrieb des Fahrzeugs gegen die sich drehende Bremsscheibe bewegt. Des Weiteren beinhalten bekannte elektromechanische Bremsaktuatoren ein Antriebsmittel, mittels dessen eine Antriebsbewegung, vorzugsweise eine rotatorische Antriebsbewegung, erzeugt wird, und ein Koppelgetriebe, welches das Antriebsmittel und den Bremsstößel miteinander in Wirkverbindung bringt. Zudem wird mittels des Koppelgetriebes die Antriebsbewegung des Antriebsmittels in die Verstellbewegung des Bremsstößels gewandelt.

Das Koppelgetriebe setzt somit die Antriebsbewegung des Antriebsmittels in die zur Aktuierung des Bremssattels notwendige Linearbewegung des Bremsstößels um.

Aus EP 3 622 194 B4 oder WO 2017/220384 A1 sind beispielsweise elektromechanische Bremsaktuatoren für Bremsen von Fahrzeugen bekannt, welche Koppelgetriebe aufweisen, die ein nichtlineares Übertragungsverhalten zwischen der von dem Antriebsmittel erzeugten Antriebsbewegung und der von dem Bremsstößel ausgeführten Verstellbewegung haben. Insbesondere wird eine gleichmäßige Antriebsbewegung bzw. eine Antriebsbewegung mit einer gleichmäßigen Antriebsgeschwindigkeit in eine Verstellbewegung des Bremsstößels mit einer variierenden Verstellgeschwindigkeit gewandelt. Dadurch durchläuft der Bremsstößel entlang seines Verstellweges Bereiche, in denen der Bremsstößel schneller, beispielsweise zur Überbrückung des Lüftspiels zwischen Bremsbelag und Bremsscheibe, oder auch langsamer, z. B. mit Erreichen des Verstellwegendes durch den Bremsstößel, bewegt wird.

Das in EP 3 622 194 B4 offenbarte Koppelgetriebe umfasst dazu eine Kurvenscheibe, welche mit ihrer äußeren Umfangsfläche zur Übertragung der Antriebsbewegung mit dem Bremsstößel in Anlage steht und durch deren Drehung den Bremsstößel in Längsrichtung verstellt. Durch die vorgegebene Außenkontur der Kurvenscheibe wird bei deren gleichmäßiger Drehung eine ungleichmäßige Verstellbewegung des Bremsstößels erzeugt. Ein derart ausgebildeter Bremsaktuator benötigt einen vergleichsweise großen Bauraum im Bereich der Radaufhängung eines Fahrzeugs.

In WO 2017/220384 A1 wird ein Koppelgetriebe verwendet, welches ein Rampengetriebe und ein Gewindegetriebe umfasst, die unterschiedliche Übersetzungsverhältnisse haben und ein nichtlineares Übertragungsverhalten umsetzen und ebenfalls eine gleichmäßige Antriebsbewegung in eine ungleichmäßige Verstellbewegung des Bremsstößels wandeln. Ein derartiges Koppelgetriebe weist einen komplexen Aufbau auf, der eine Vollintegration des Bremsaktuators in den Bremssattel der Scheibenbremse erforderlich macht. Die im Vergleich zu EP 3 622 194 B1 kompaktere Ausgestaltung ermöglicht jedoch keine Anbindung oder Kombination an bestehende Bremssysteme, was eine kostenintensive Neuentwicklung solcher elektromechanisch betätigten Bremssysteme für jede einzelne der bisher bekannten Leistungsklassen notwendig machen würde.

Vor diesem Hintergrund lag der vorliegenden Erfindung die Aufgabe zugrunde, einen elektromechanischen Bremsaktuator aufzuzeigen, der die vorstehend beschriebenen Nachteile möglichst weitgehend überwindet. Insbesondere bestand die Aufgabe, einen elektromechanischen Bremsaktuator anzugeben, der im Vergleich zu pneumatischen Bremsaktuatoren einen ähnlich geringen Bauraum benötigt und zudem mit bestehenden Bremssystemen bestenfalls ohne zusätzlichen konstruktiven Aufwand bei gleichzeitig geringer Bauteilkomplexität und möglichst geringer erforderlicher Antriebsleistung auf einfache Weise kombinierbar ist.

Die Erfindung löst die ihr zugrundeliegende Aufgabe bei einem elektromechanischen Bremsaktuator der eingangs beschriebenen Art, indem das Koppelgetriebe ein mit dem Bremsstößel in Anlage stehendes Koppelglied aufweist, das entlang mindestens einer Kurvenbahn beweglich geführt und dazu eingerichtet ist, eine auf das Koppelglied wirkende Antriebsbewegung mit einer im Wesentlichen gleichmäßigen Antriebsgeschwindigkeit in die Bewegung des Bremsstößels mit einer abschnittsweise ungleichmäßigen Verstellgeschwindigkeit zu wandeln.

Vorzugsweise weist das Koppelgetriebe damit zumindest abschnittsweise eine nichtlineare Übertragungsfunktion zwischen der Antriebsbewegung des Antriebsmittels und der Verstellbewegung des Bremsstößels auf. Vorzugsweise ist der Stellweg des Antriebsmittels zumindest abschnittsweise nicht proportional zum Stellweg des Bremsstößels. Vorzugsweise ist das Antriebsmoment des Antriebsmittels zumindest abschnittsweise nicht proportional zur Antriebskraft des Bremsstößels.

Die Erfindung macht sich vorliegend die Erkenntnis zunutze, dass mittels eines entlang einer Kurvenbahn beweglich geführten Koppelglieds am Koppelgetriebe die Antriebsbewegung mit ihrer im Wesentlichen gleichmäßigen Antriebsgeschwindigkeit auf einfache Weise in eine Verstellbewegung des Bremsstößels mit einer abschnittsweise ungleichmäßigen Verstellgeschwindigkeit gewandelt werden kann. Mittels des zumindest mit dem Bremsstößel in Anlage stehenden Koppelglieds ist ein nichtlineares Übertragungsglied im Koppelgetriebe ausgebildet, das wenig Bauraum benötigt und die platzsparende Ausgestaltung des elektromechanischen Bremsaktuators ermöglicht. Das entlang zumindest einer Kurvenbahn beweglich geführte Koppelglied kann derart platzsparend ausgeführt sein, dass der vorliegend erfindungsgemäße elektromechanische Bremsaktuator im Vergleich zu den bekannten Bremsaktuatoren mit nichtlinearen Übertragungsverhalten deutlich kompakter ausgeführt ist und insbesondere im Vergleich zu einem fluidbetriebenen Bremsaktuator somit nicht mehr Bauraum benötigt. Zudem ist mit der vorgeschlagenen erfindungsgemäßen Lösung auch weiterhin die Modulbauweise eines damit ausgerüsteten Bremssystems gegeben, da der erfindungsgemäß ausgebildete elektromechanische Bremsaktuator grundsätzlich auch mit gängigen, bisher fluidisch angesteuerten Scheibenbremsen kombiniert werden kann.

Das Koppelgetriebe ermöglicht es somit, einen Stellweg des Antriebsmittels zumindest abschnittsweise nicht-proportional in die Verstellbewegung des Bremsstößels zu wandeln. Dies hat zur Folge, dass auch die vom Bremsstößel übertragbare Zuspannkraft zumindest abschnittsweise nicht-proportional zum bereitgestellten Stellmoment des Bremsaktuators ist. Es wird somit ein nichtlineares Koppelgetriebe angeben, dass es ermöglicht, für die Auslegung des Antriebsmittels geringe Antriebsdrehmomente vorzusehen, wobei das Koppelgetriebe derart kompakt ist, dass dieses besonders gut im stark begrenzten Bauraum innerhalb des Fahrzeug aufnehmbar ist.

Gemäß einer bevorzugten Weiterbildung der Erfindung ist vorgesehen, dass die Kurvenbahn mehrere Bahnabschnitte aufweist, welche jeweils unterschiedliche Übersetzungsverhältnisse der Antriebsbewegung des Koppelglieds in die Verstellbewegung des Bremsstößels definieren. Die insbesondere als Führungsbahn für das Koppelglied wirkende Kurvenbahn ist derart ausgeführt, dass beim Bewegen des Koppelglieds entlang der Kurvenbahn der durch das Koppelglied betätigte Bremsstößel trotz einer im Wesentlichen gleichmäßigen Antriebsbewegung des Koppelglieds selbst abschnittsweise mit einer gegenüber der Antriebgeschwindigkeit vergrößerten bzw. verringerten Geschwindigkeit bewegt wird. Insbesondere ein zu Beginn eines Bremsvorgangs zu überwindendes Lüftspiel zwischen der Bremsscheibe und einem damit in Reibwirkung bringbaren Bremsbelag kann somit beschleunigt, also in kürzerer Zeit überfahren werden.

Hingegen wird in einem weiteren, insbesondere nachgelagerten Bahnabschnitt, entlang dessen das Aufbringen größerer Verstellkräfte auf den Bremsstößel erforderlich ist, eine Verstellbewegung mit einer im Vergleich zum vorgelagerten Bahnabschnitt verringerten Geschwindigkeit umgesetzt.

In einer bevorzugten Weiterbildung weist das Koppelgetriebe entlang wenigstens eines Bahnabschnitts ein Übersetzungsverhältnis von der Antriebsbewegung des Koppelglieds zur Verstellbewegung des Bremsstößels auf, welches kleiner 1 ist. Der Bahnabschnitt der ein Übersetzungsverhältnis definiert, das kleiner 1 ist, also eine Übersetzung der Antriebsbewegung in eine schnellere Verstellbewegung vornimmt, bildet insbesondere einen ersten Bahnabschnitt der Kurvenbahn aus. Vorzugsweise ist der erste Bahnabschnitt derart ausgeführt, dass die im Kopplungsbereich des Koppelglieds mit dem Koppelgetriebe wirkende Antriebsbewegung etwa verdoppelt wird. Der Bremsstößel wird somit im Bereich des ersten Bahnabschnitts vorzugsweise zweimal so schnell bewegt wie der Teil des Koppelglieds, der unmittelbar mit dem damit gekoppelten Koppelgetriebe verbunden ist. Gemäß einer Ausführung weist der erste Bahnabschnitt einen gekrümmten bzw. kurvenförmigen Verlauf auf. Speziell das zu Beginn eines Bremsvorgangs zu überbrückende Lüftspiel wird dadurch antriebsseitig mit einem vergleichsweise kurzen Antriebsweg des Koppelglieds überfahren.

In einer möglichen Weiterbildung weist das Koppelgetriebe entlang wenigstens eines Bahnabschnitts ein Übersetzungsverhältnis von der Antriebsbewegung des Koppelglieds zur Verstellbewegung des Bremsstößels auf, welches im Wesentlichen gleich 1 ist 1. Der Bahnabschnitt der ein Übersetzungsverhältnis definiert, das etwa 1 ist, also keine Veränderung der Geschwindigkeit der Antriebsbewegung in die der Verstellbewegung vornimmt, bildet insbesondere einen zweiten Bahnabschnitt der als Führungsbahn ausgebildeten Kurvenbahn aus. Der Bremsstößel wird somit im Bereich des zweiten Bahnabschnitts in etwa mit derselben Geschwindigkeit bewegt, wie das gesamte, durch das Koppelgetriebe abschnittsweise gleichförmig bewegte Koppelglied. Der zweite Bahnabschnitt ist insbesondere geradlinig ausgeführt bzw. weist einen geradlinigen Verlauf auf. Beim Bewegen des Koppelglieds entlang des zweiten Bahnabschnitts behält dieses vorzugsweise eine unveränderte Ausrichtung bzw. Lage zum zweiten Bahnabschnitt bei.

In einer möglichen weiteren Ausgestaltung weist das Koppelgetriebe entlang wenigstens eines Bahnabschnitts ferner ein Übersetzungsverhältnis von der Antriebsbewegung des Koppelglieds zur Verstellbewegung des Bremsstößels auf, welches größer 1 ist. Mithilfe dieses Bahnabschnitts der Kurvenbahn, der insbesondere einen dem zweiten Bahnabschnitt nachgelagerten dritten Bahnabschnitt der Kurvenbahn definiert, erfolgt eine Untersetzung der auf das Koppelglied einwirkenden Antriebsbewegung, sodass der mit dem Koppelglied zumindest in Anlage stehende Bremsstößel eine Verstellbewegung mit einer geringeren, insbesondere sich kontinuierlich verringernden Verstellgeschwindigkeit ausführt. Der Bremsstößel wird somit im Bereich des dritten Bahnabschnitts langsamer bewegt insbesondere kontinuierlich verzögert gegenüber dem Teil des Koppelglieds, das den antriebsseitigen Verbindungspunkt mit dem vorgeschalteten Teil des Koppelgetriebes ausbildet. Die sich verringernde Verstellgeschwindigkeit des Bremsstößels in diesem dritten Bahnabschnitt ermöglicht insbesondere im Bereich der maximalen Zuspannkraft der Bremse eine Verringerung des zum Antrieb des Koppelgetriebes benötigten Antriebsmoments. Ein elektromechanischer Bremsaktuator, der ein derart erfindungsgemäß ausgebildetes Koppelgetriebe aufweist, kann mit einem Antriebsmittel ausgerüstet werden, das im Vergleich zu Bremsaktuatoren mit einem Koppelgetriebe mit einer linearen Übertragungsfunktion ein verringertes Antriebsmoment benötigt, was die Kosten für einen solch erfindungsgemäßen Bremsaktuator weiter minimiert.

Gemäß einer bevorzugten Weiterbildung weist das Koppelglied ein Übertragungselement auf, welches entlang eines Abschnitts seiner Erstreckungsrichtung mittels eines Drehlagers schwenkbeweglich mit dem Koppelgetriebe verbunden ist, und in einem vorgegebenen Abstand zum Drehlager entlang der Kurvenbahn geführt ist. Das Vorsehen eines Übertragungselements am Koppelglied ermöglicht eine konstruktiv einfache Ausgestaltung als festes Verbindungsteil zwischen dem Bremsstößel und dem Koppelgetriebe sowie zur Umsetzung der nichtlinearen Übertragungsfunktion mittels des Koppelgetriebes. Vorzugsweise wird das Übertragungselement des Koppelglieds, welches vorzugsweise die Funktion einer Hebelstange hat, zum Ausführen des nichtlinearen Übertragungsverhaltens mittels des Koppelgetriebes bewegt und zudem führt wenigstens ein Abschnitt des Koppelglieds eine Relativbewegung zu dem das Koppelglied bewegenden Teil des Koppelgetriebes aus. Dadurch entsteht an einem zum geführten Abschnitt bezogen auf das Drehlager gegenüberliegenden Abschnitt des Übertragungselements eine Überlagerung zweier Bewegungen, wodurch bevorzugt die nichtlineare Übertragungsfunktion am elektromechanischen Bremsaktuator verwirklicht ist. Die mehreren Bahnabschnitte der Kurvenbahn sind bevorzugt benachbart zu der mittels des Koppelgetriebes umgesetzten Bewegungsbahn des Koppelglieds angeordnet. Mit Bewegen des Übertragungselements wird das Koppelglied entlang der verschiedenen Bahnabschnitte geführt bzw. stützt sich rollend entlang der Bahnabschnitte ab, wobei während des Bewegens des Koppelglieds das Übertragungselement des Koppelglieds seine Ausrichtung bezogen auf das Drehlager am Koppelgetriebe verändert.

Gemäß einer bevorzugten Ausführung ist das Koppelglied an einem Ende entlang der Kurvenbahn geführt und mit dem entgegengesetzten Ende mit dem Bremsstößel gekoppelt. Mit dem an einem Ende geführten und bevorzugt am entgegengesetzten Ende mit dem Bremsstößel gekoppelten Koppelglied erfolgt im Zusammenhang mit der schwenkbeweglichen Aufnahme des Koppelglieds am Koppelgetriebe bei einer Änderung in der Führung des Koppelglieds eine unmittelbare Reaktion am entgegengesetzten Ende des Koppelglieds und in der Verstellbewegung des damit verbundenen Bremsstößels. Vorzugsweise weist der erste Bahnabschnitt zur Umsetzung eines Übersetzungsverhältnisses kleiner 1 einen kurvenförmigen Verlauf auf, der derart zur Bewegungsbahn des durch das Koppelgetriebe bewegten Koppelglieds angeordnet bzw. ausgebildet ist, dass das entlang des ersten Bahnabschnitts geführte Ende des Koppelglieds beim Ausführen der Antriebsbewegung zeitweise ortsfest angeordnet bleibt. Erst mit Übergang des Koppelglieds in den zweiten Bahnabschnitt der Kurvenbahn, das ein Übersetzungsverhältnis von etwa 1 umsetzt, wird eine Bewegung des in der Kurvenbahn geführten Endes des Koppelglieds umgesetzt. Der zweite Bahnabschnitt der Kurvenbahn verläuft dabei insbesondere parallel zu der mittels des Koppelgetriebes umgesetzten Bewegungsbahn des Verbindungspunkts zum Koppelglied. Mit Erreichen des dritten Bahnabschnitts, der ein Übersetzungsverhältnis größer 1 definiert, wird wiederum eine Relativbewegung des Koppelglieds zu dem das Koppelglied bewegenden Teil des Koppelgetriebes erzeugt, was eine erneute Änderung, insbesondere Verringerung in der Geschwindigkeit der Verstellbewegung des Bremsstößels zur Folge hat. Der dritte Bahnabschnitt kann geradlinig oder gekrümmt ausgeführt sein, wobei ein insbesondere geradlinig ausgeführter dritter Bahnabschnitt in einem Winkel geneigt zu der mittels des Koppelgetriebes im Verbindungspunkt für das Koppelglied ausgebildeten Bewegungsbahn verläuft.

Vorzugsweise ist das Koppelglied mit seinem mit dem Bremsstößel gekoppelten Ende entlang einer weiteren Kurvenbahn geführt. Zusätzlich zu der das eine (erste) Ende des Koppelglieds führenden Kurvenbahn ist eine weitere, zweite Kurvenbahn vorgesehen, welche das mit dem Bremsstößel gekoppelte (zweite) Ende führend aufnimmt. Mit den zwei Kurvenbahnenkönnen etwaige auf das Koppelgetriebe insbesondere quer zur Bewegungsbahn des Koppelglieds einwirkende Kräfte abgefangen werden. Speziell einem wegen der am Koppelglied bzw. am Koppelgetriebe angreifenden Hebelwirkung entstehenden Moment kann mittels der zwei Führungsbahnen entgegengewirkt und ein solches über beide Kurvenbahnen sicher in ein das Koppelgetriebe aufnehmendes Gehäuse abgeleitet werden. Vorzugsweise ist die zweite dem bremsstößelseitigen Ende zugeordnete Kurvenbahn mit ihren Bahnabschnitten korrespondierend zu der "ersten" Kurvenbahn bzw. deren Bahnabschnitte ausgebildet, so dass ein ungehindertes Bewegen des Koppelgliedes entlang beider Kurvenbahnen erreicht ist.

Gemäß einer bevorzugten Ausführung ist das Koppelgetriebe dazu eingerichtet, eine Wandlung von einer rotatorischen Bewegung zu einer translatorischen Bewegung vorzunehmen, vorzugsweise mittels eines Kugel-Gewindetriebs, welcher eine drehbar gelagerte Gewindespindel und eine entlang der Gewindespindel beweglich geführte Gewindemutter aufweist, wobei das Koppelglied schwenkbar an der Gewindemutter gelagert ist. Das Vorsehen eines Kugel-Gewindetriebs ermöglicht eine konstruktiv einfache Möglichkeit zum Wandeln einer mittels des Antriebsmittels erzeugten Drehbewegung in eine translatorische Bewegung. Zudem können mithilfe eines Kugel-Gewindetriebs, der bevorzugt eine in axialer Richtung ortsfest aufgenommene Gewindespindel und eine in axialer Richtung der Gewindespindel beweglich geführte Gewindemutter hat, hohe axiale Kräfte aufgenommen werden, die beim Erzeugen der auf das Koppelglied einwirkenden Antriebsbewegung entstehen. Anstelle einer in axialer Richtung ortsfest gelagerten Gewindespindel und einer entlang der Gewindespindel bewegbaren Gewindemutter, können an einem Koppelgetriebe eine in axialer Richtung ortsfest, aber an sich drehbar gelagerte Mutter und eine in axialer Richtung relativ zur Gewindemutter bewegbare Gewindespindel eingesetzt werden, auch wenn dies mit einem partiell vergrößerten Bauraumbedarf einhergeht.

Eine mögliche Weiterbildung des elektromechanischen Bremsaktuators sieht vor, dass das Antriebsmittel, vorzugsweise ein Elektromotor, eine Drehachse aufweist, welche zur Längsachse der Gewindespindel parallel ausgerichtet ist, und wobei das Antriebsmittel mit der Gewindespindel vorzugsweise mittels mehrerer Stirnräder drehgebend gekoppelt ist. Mit der parallelen Ausrichtung der Drehachse des Elektromotors zur Drehachse der Gewindespindel ist eine einfache Übertragung der Antriebsbewegung in Richtung des Koppelgetriebes bewirkt. Die Übertragung der vom Antriebsmittel erzeugten Drehbewegung auf das Koppelgetriebe erfolgt bevorzugt mittels mehrerer Stirnräder. Vorzugsweise ist mittels der das Antriebsmittels mit der Gewindespindel verbindenden Stirnräder ein Untersetzungsgetriebe ausgeführt. Eine vom Antriebsmittel erzeugte Drehzahl wird in Richtung der Abtriebsseite verringert, wohingegen das übertragene Drehmoment vergrößert wird. Dadurch können kostengünstige Antriebsmittel, insbesondere kostengünstige Elektromotoren mit geringen Antriebdrehmomenten, zum Einsatz kommen.

Gemäß einer bevorzugten Weiterbildung der Erfindung ist vorgesehen, dass dem Antriebsmittel oder dem Koppelgetriebe eine Messeinrichtung zum Erfassen der mittels des Antriebsmittels erzeugten Aktuatorkraft zugeordnet ist. Damit lassen sich Rückschlüsse auf die mittels des elektromechanischen Bremsaktuators erzeugten und in Richtung des Bremsbelages übertragenen Bremskraft ziehen. Insbesondere ein innerhalb des Bremsaktuators auftretender Defekt kann mithilfe der Aktuatorkraft-Messeinrichtung auf einfache Weise erfasst werden, insbesondere dann, wenn das vom Antriebsmittel erzeugte zulässige Antriebsmoment gegebenenfalls schon vor Erreichen einer vorbestimmten Verstellbewegung des Bremsstößels erfasst wird.

Gemäß einer möglichen Ausführung ist der Bremsstößel, bezogen auf seine Längsachse, vorzugsweise in seiner Neigung beweglich zum Koppelgetriebe aufgenommen. Durch die in der Neigung bewegliche Aufnahme des Bremsstößels, der zum Übertragen der Druckkraft in Richtung eines Bremsbelags im Wesentlichen translatorisch bewegt wird, kann insbesondere eine an dem mit dem Koppelglied verbundenen Ende in radialer Richtung auftretende Auslenkung, also quer zur Erstreckung des Bremsstößels, auf einfache Weise ausgeglichen werden. Durch die mögliche Neigungsverstellung des Bremsstößels ist zudem gewährleistet, dass die auf den Bremsstößel einwirkenden Kräfte insbesondere unmittelbar in dessen Längsrichtung wirken können. Vorzugsweise sind das dem Koppelglied zugewandte Ende des Bremsstößels und das Koppelglied über ein Drehlager in axialer Richtung fest miteinander verbunden.

Gemäß einem zweiten Aspekt betrifft die Erfindung eine Scheibenbremse, insbesondere eine Nutzfahrzeug-Scheibenbremse, mit einer Bremsscheibe, einem Bremssattel, mindestens einem am Bremssattel beweglich aufgenommenen Bremsbelag zum Erzeugen einer Bremswirkung mittels Andrücken an die Bremsscheibe, einem schwenkbar gelagerten Bremshebel zum Andrücken des mindestens einen Bremsbelags an die Bremsscheibe und einem elektromechanischen Bremsaktuator, der mit dem Bremssattel gekoppelt und dazu eingerichtet ist, eine Verstellbewegung des Bremshebels zu bewirken.

Die erfindungsgemäße Scheibenbremse löst auch die dem erfindungsgemäßen Bremsaktuator zugrunde gelegte Aufgabe, indem der elektromechanische Bremsaktuator nach einer der vorstehend beschriebenen bevorzugten Ausführungsformen ausgebildet ist. Eine mit einem solch erfindungsgemäßen Bremsaktuator ausgerüstete Scheibenbremse kann auf einfache und sichere Weise eine zum Verzögern eines Fahrzeugs notwendige Bremswirkung erzielen, wobei mittels des erfindungsgemäß ausgebildeten, nichtlinearen Übertragungsglieds am Bremsaktuator neben einem schnellen Überbrücken des Lüftspiels zwischen der Bremsscheibe und einem relativ zur Bremsscheibe bewegbaren Bremsbelag und einer beschleunigten Bremswirkung an der Bremsscheibe ein verringerter Bauraum zur Umsetzung der erfindungsgemäßen Lösung benötigt wird. Vorzugsweise ist der erfindungsgemäße Bremsaktuator mit den Aufnahmen am Bremssattel der aus dem Stand der Technik bekannten sonst über einen Fluidantrieb betätigbaren Scheibenbremsen koppelbar. Mit einer solch erfindungsgemäßen Scheibenbremse ist somit der modulare Aufbau der verschiedenen damit koppelbaren Einzelkomponenten weiterhin gewährleistet, was den Austausch der bisherigen fluidischen Aktuierung durch den in dieser Erfindung beschriebenen elektromechanischen Aktor ermöglicht und zudem bzw. die Reparatur von Systemkomponenten im Falle eines Defekts erleichtet.

Gemäß einer bevorzugten Ausführungsform der Scheibenbremse ist der Bremsstößel des Bremsaktuators vorzugsweise unmittelbar mit dem am Bremssattel beweglich aufgenommenen Bremshebel gekoppelt. Zwischen dem Bremsstößel des Bremsaktuators erfolgt somit eine direkte Übertragung der vom Bremsaktuator erzeugten Druckkraft auf den Bremshebel, von dem aus die Druckkraft in Richtung des ebenfalls beweglich am Bremssattel aufgenommenen Bremsbelags geleitet wird. Bremsstößel und Bremshebel weisen insbesondere unmittelbar miteinander korrespondierende Kontaktflächen auf, die derart ausgeführt sind, dass über die Kontaktflächen ein veränderbarer Neigungswinkel von Bremshebel und Bremsstößel relativ zueinander ausgeglichen werden kann.

Die Erfindung betrifft gemäß einem weiteren Aspekt ein Fahrzeug, insbesondere Nutzfahrzeug, mit einem Bremsaktuator gemäß einer der vorstehend beschriebenen bevorzugten Ausführungsformen oder einer Scheibenbremse gemäß einer der vorstehend beschriebenen, bevorzugten Ausführungsformen.

Die Erfindung gemäß dem zweiten und dem dritten Aspekt macht sich dieselben Vorteile zunutze wie der elektromechanische Bremsaktuator gemäß dem ersten Aspekt. Bevorzugte Ausführungsformen bzw. Weiterbildungen des ersten Aspekts sind zugleich auch bevorzugte Ausführungsformen bzw. Weiterbildungen der Scheibenbremse gemäß dem zweiten Aspekt sowie des Fahrzeugs gemäß dem dritten Aspekt und umgekehrt, weswegen zur Vermeidung von Wiederholungen diesbezüglich auf die obigen Ausführungen verwiesen wird.

Die Erfindung wird nun im Folgenden anhand eines bevorzugten Ausführungsbeispiels unter Bezugnahme auf die beigefügten Figuren näher beschrieben. Hierbei zeigen:
- FIG. 1:: eine Ansicht einer erfindungsgemäßen Scheibenbremse im Schnitt mit einem daran angeordneten, abstrahiert dargestellten Bremsaktuator;
- FIG. 2:: eine schematische Schnittansicht des Bremsaktuators aus FIG. 1;
- FIG. 3a, b:: Darstellungen, welche das Wirkprinzip des erfindungsgemäßen Koppelgetriebes am Bremsaktuator verdeutlichen und
- FIG. 4:: eine schematische Ansicht eines Fahrzeugs mit einer erfindungsgemäßen Scheibenbremse.

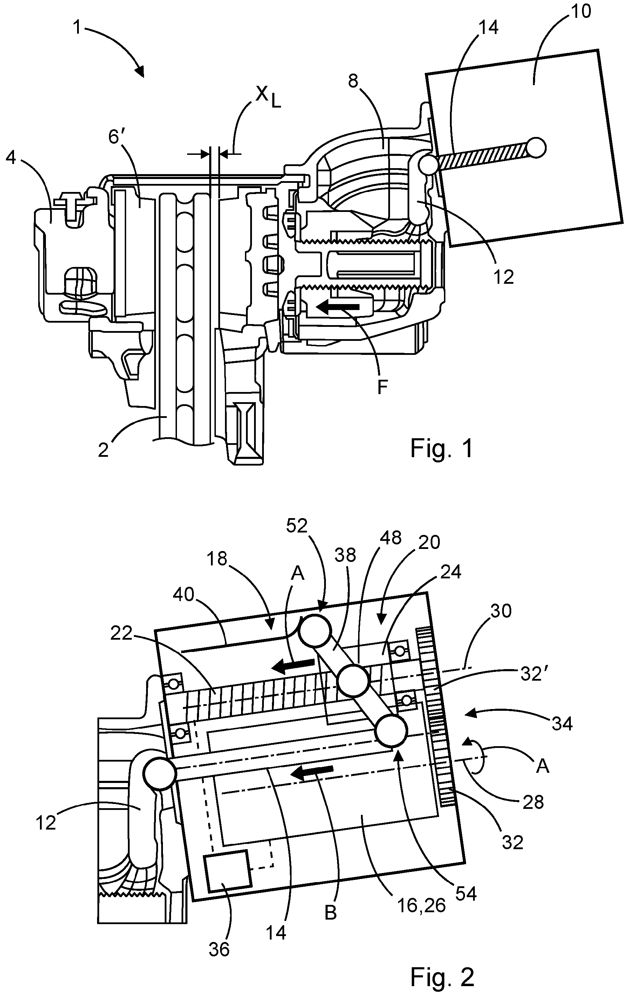

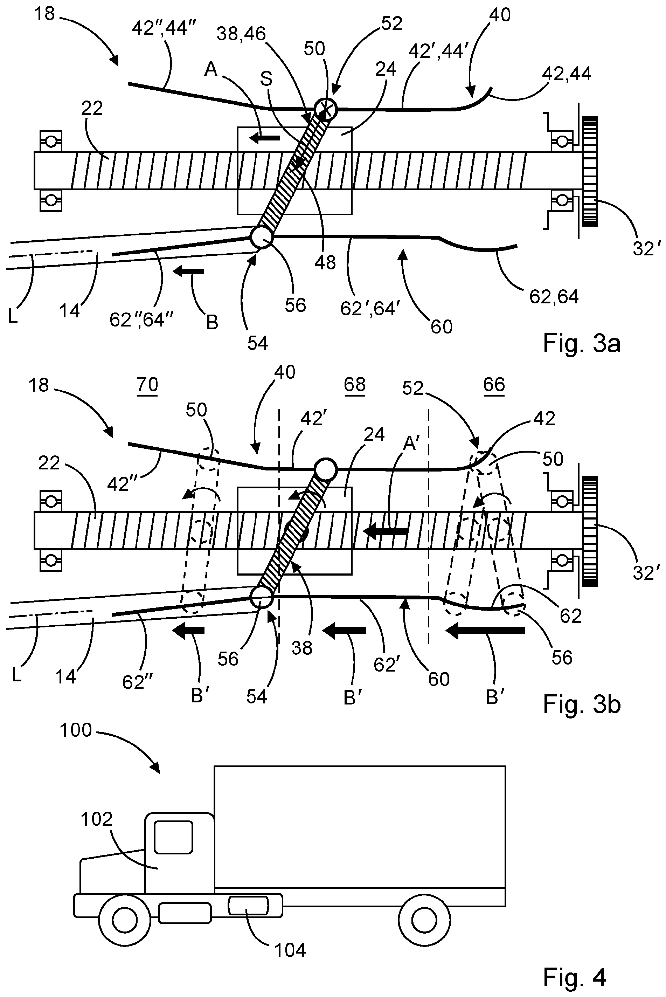

FIG. 1 zeigt eine Scheibenbremse 1 für ein in FIG. 4 näher gezeigtes Fahrzeug 100, insbesondere ein Nutzfahrzeug 102. Die Scheibenbremse 1 umfasst eine Bremsscheibe 2, welche rotierbar um eine nicht näher gezeigte Rotationsachse gelagert ist. Die Scheibenbremse 1 weist ferner einen Bremssattel 4 und zwei zu beiden Seiten der Bremsscheibe 2 am Bremssattel 4 relativ zueinander beweglich aufgenommene Bremsbeläge 6, 6' auf.

Die Scheibenbremse 1 umfasst ferner einen nicht näher gezeigten Sattelträger, der dazu eingerichtet ist, den Bremssattel 4 aufzunehmen und diesen mit einem ebenfalls nicht näher gezeigten, starren Achsteil des Fahrzeugs 100 ortsfest zu koppeln. Der Bremssattel 4 ist in der vorliegend gezeigten Ausführung relativ beweglich zum Sattelträger ausgeführt. Am Bremssattel 4 ist ferner ein Kopplungsabschnitt 8 zum Befestigen eines in FIG. 1 schematisch dargestellten elektromechanischen Bremsaktuators 10 vorgesehen.

Der elektromechanische Bremsaktuator 10 wirkt insbesondere mit einem schwenkbar gelagerten Bremshebel 12 zum Andrücken des mindestens einen Bremsbelags 6, 6' an die Bremsscheibe 2 zusammen. Der elektromechanische Bremsaktuator 10 umfasst wenigstens einen im Wesentlichen translatorisch bewegbaren Bremsstößel 14 zum Übertragen einer Druckkraft F in Richtung eines der Bremsbeläge 6, 6'.

In FIG. 2 ist eine schematische Schnittdarstellung des Bremsaktuators 10 gezeigt, der neben dem Bremsstößel 14 ferner ein Antriebsmittel 16 umfasst, das dazu eingerichtet ist, eine Antriebsbewegung A, vorzugsweise eine rotatorische Antriebsbewegung, zu erzeugen. Zudem weist der elektromechanische Bremsaktuator 10 ein Koppelgetriebe 18 auf, welches das Antriebsmittel 16 und den Bremsstößel 14 miteinander wirkverbindet. Das Koppelgetriebe 18 ist zudem dazu eingerichtet, die Antriebsbewegung A des Antriebsmittels 16 in eine translatorische Verstellbewegung B des Bremsstößels 14 zu wandeln.

Das Koppelgetriebe 18 weist in der vorliegend gezeigten Ausführung einen Kugel-Gewindetrieb 20 auf, welcher eine drehbar gelagerte Gewindespindel 22 und eine entlang der Gewindespindel 22 beweglich geführte Gewindemutter 24 aufweist. Das Antriebsmittel 16, welches vorzugsweise als Elektromotor 26 ausgeführt ist, weist eine Drehachse 28 auf, die zur Längsachse 30 der Gewindespindel parallel ausgerichtet ist. Das Antriebsmittel 16 ist insbesondere mittels mehrerer Stirnräder 32, 32', welche Teil eines Stirnradgetriebes 34 sind, mit der Gewindespindel 22 drehgebend verbunden.

In einer möglichen Ausführung weist der elektromechanische Bremsaktuator 10 eine Messeinrichtung 36 zum Erfassen des mittels des Antriebsmittels 16 erzeugten oder des mittels des Koppelgetriebes 18 übertragenen Antriebsmoments auf.

In der in FIG. 2 gezeigten Ausführung weist das Koppelgetriebe 18 ein mit dem Bremsstößel 14 zumindest in Anlage stehendes Koppelglied 38 auf, das entlang mindestens einer Kurvenbahn 40 beweglich geführt ist. Das Koppelglied 38 bildet innerhalb des Koppelgetriebes 18 insbesondere ein nichtlineares Übertragungsglied am Bremsaktuator 10 aus. Das Koppelglied 38 ist dazu eingerichtet, eine auf das Koppelglied 38 wirkende Antriebsbewegung A mit einer im Wesentlichen gleichmäßigen Antriebsgeschwindigkeit A' (Fig.3b) in die Verstellbewegung B des Bremsstößels 14 mit einer abschnittsweise ungleichmäßigen Verstellgeschwindigkeit B' (Fig.3b) zu wandeln.

Wie ferner aus FIG. 2 ersichtlich, weist die Kurvenbahn 40 mehrere Bahnabschnitte 42, 42' auf, welche jeweils unterschiedliche Übersetzungsverhältnisse *i* der Antriebsbewegung des Koppelglieds in die Verstellbewegung des Bremsstößels definieren. Ein Bahnabschnitt, insbesondere ein erster Bahnabschnitt 42, weist einen gekrümmten Verlauf 44 auf. Ein weiterer, insbesondere ein zweiter Bahnabschnitt 42', weist einen geradlinigen Verlauf 44 auf.

Die FIG. 3a und 3b verdeutlichen den Aufbau und insbesondere das Wirkprinzip des erfindungsgemäßen Koppelgetriebes 18 mit seinem Koppelglied 38, das mittels der Kurvenbahn 40 eine nichtlineare Übertragungsfunktion am Bremsaktuator 10 umsetzt. Das Koppelglied 38 weist ein die Funktion einer Hebelstange umsetzendes Übertragungselement 46 auf. Das Koppelglied 38 ist entlang eines Abschnitts seiner Erstreckung mittels eines Drehlagers 48 schwenkbeweglich mit dem vorgelagerten Teil des Koppelgetriebes 18, insbesondere der beweglich geführten Gewindemutter 24, verbunden.

Das Koppelglied 38 weist in einem vorgegebenen Abstand s zum Drehlager 48 ein Gelenkpunkt 50 auf, der zum Koppeln mit und zum Führen entlang der Kurvenbahn 40 eingerichtet ist. In der vorliegend gezeigten Ausführungsform ist der Gelenkpunkt 50 an einem ersten Ende 52 des Koppelglieds 38 angeordnet, welches entlang der Kurvenbahn geführt ist. Das Koppelglied 38 ist mit seinem entgegengesetzten, zweiten Ende 54 mittels eines zweiten Gelenkpunkts 56 mit dem Bremsstößel 14 gekoppelt. In einer weiteren bevorzugten Ausführung weist der Bremsaktuator 10 zusätzlich zur Kurvenbahn 40 eine weitere, zweite Kurvenbahn 60 auf, entlang derer das mit dem Bremsstößel 14 gekoppelte, zweite Ende 54 des Koppelglieds 38 mittels des zweiten Gelenkpunkts 56 geführt wird.

Die Kurvenbahn 60 weist in der gezeigten Ausführung mehrere Bahnabschnitte 62, 62' auf, wobei die Kurvenbahn 60 mit ihren Bahnabschnitten 62, 62'korrespondierend zu der ersten Kurvenbahn 40 mit ihren Bahnabschnitten 42, 42' ausgebildet ist, derart dass die nichtlineare Übertragungsfunktion umsetzbar ist. Der Bahnabschnitt 62 weist ebenfalls einen gekrümmten Verlauf 64 und der Bahnabschnitt 62' einen geradlinigen Verlauf 64' auf. Die Bahnabschnitte 42' und 62' der Kurvenbahn 40, 40' sind insbesondere parallel verlaufend zueinander angeordnet. Wie sich aus dem Verlauf der zweiten Kurvenbahn 60 ergibt, ist der Bremsstößel 14, bezogen auf seine Längsachse L, in seiner Neigung relativ beweglich zum Koppelgetriebe 18 aufgenommen.

FIG. 3b verdeutlicht im Detail die Funktion des entlang der Kurvenbahn(en) 40, 60 geführten Koppelglieds 38. Die Kurvenbahn(en) 40, 60 unterteilt bzw. unterteilen mit ihren Bahnabschnitten die Bewegung des Koppelglieds 38 in drei verschiedene Bewegungsabschnitte 66, 68, 70. Im ersten Bewegungsabschnitt 66 setzt das Koppelgetriebe 18 entlang des ersten Bahnabschnitts 42 der Kurvenbahn 40 ein Übersetzungsverhältnis *i* von der Antriebsbewegung A des Koppelglieds 38 zur Verstellbewegung B des Bremsstößels 14 von kleiner 1 um. Dies bedeutet, dass die Antriebsbewegung A des Koppelglieds 38, welche mittels der entlang der Gewindespindel 22 geführten Gewindemutter 24 erfolgt, in eine Verstellbewegung B des Bremsstößels 14 mit einer größeren Verstellgeschwindigkeit B' gewandelt wird.

Im Bewegungsabschnitt 68 setzt das Koppelglied 38 entlang wenigstens des zweiten Bahnabschnitts 42' ein Übersetzungsverhältnis *i* von der Antriebsbewegung A des Koppelglieds 38 zur Verstellbewegung B des Bremsstößels 14 von etwa 1 um. Das heißt, dass die Antriebsbewegung des Koppelglieds 38 in eine Verstellbewegung B des Bremsstößels 14 mit einer etwa gleichgroßen Verstellgeschwindigkeit B' gewandelt wird.

Zur Ausbildung des Bewegungsabschnitts 70 weisen die erste und auch die zweite Kurvenbahn 40, 60 jeweils einen weiteren, dritten Bahnabschnitt 42", 62" auf. Die Bahnabschnitte 42", 62" haben ebenfalls einen geradlinigen Verlauf 44", 64", wobei diese jedoch nicht parallel, sondern in einem Winkel geneigt zueinander verlaufen. Dadurch setzt das Koppelglied 38 entlang der dritten Bahnabschnitte 42", 62" ein Übersetzungsverhältnis *i* von der Antriebsbewegung A des Koppelglieds 38 zur Verstellbewegung B des Bremsstößels 14 von größer 1 um. Somit wird im Bewegungsabschnitt 70 die Antriebsbewegung A des Koppelglieds 38, welche über den gesamten Antriebsweg gleichförmig ist bzw. eine gleichmäßige Antriebsgeschwindigkeit A' aufweist, in eine Verstellbewegung B des Bremsstößels 14 mit einer geringeren Verstellgeschwindigkeit B' gewandelt wird.

In FIG. 6 ist eine schematische Darstellung eines Kraftfahrzeugs 100 gezeigt, insbesondere eines Nutzfahrzeugs 102. Das Kraftfahrzeug 100 ist mit einem Bremssystem 104 ausgerüstet, das eine in den FIG. 1 bis 3b gezeigte erfindungsgemäße Ausführungsform einer Scheibenbremse 1 mit einem daran angeordneten elektromechanischen Bremsaktuator 10 aufweist.

### Bezugszeichen (Teil der Beschreibung)

- 1: Scheibenbremse
- 2: Bremsscheibe
- 4: Bremssattel
- 6, 6': Bremsbelag
- 8: Kopplungsabschnitt
- 10: elektromechanischer Bremsaktuator
- 12: Bremshebel
- 14: Bremsstößel
- 16: Antriebsmittel
- 18: Koppelgetriebe
- 20: Kugelgewindetrieb
- 22: Gewindespindel
- 24: Gewindemutter
- 26: Elektromotor
- 28: Drehachse
- 30: Längsachse
- 32, 32': Stirnrad
- 34: Stirnradgetriebe
- 36: Messeinrichtung
- 38: Koppelglied
- 40: Kurvenbahn
- 42, 42', 42": Bahnabschnitt
- 44, 44', 44": Verlauf
- 46: Übertragungselement
- 48: Drehlager
- 50, 56: Gelenkpunkt
- 52: erstes Ende
- 54: zweites Ende
- 60: Kurvenbahn
- 62, 62', 62": Bahnabschnitt
- 64, 64', 64": Verlauf
- 66, 68, 70: Bewegungsabschnitt
- 100: Fahrzeug
- 102: Nutzfahrzeug
- 104: Bremssystem
- A, A': Antriebsbewegung/-geschwindigkeit
- B, B': Verstellbewegung/-geschwindigkeit
- F: Druckkraft
- *i*: Übersetzungsverhältnis
- L: Längsachse
- s: Abstand
- x_{L}: Lüftspiel

## Patentansprüche

1. Elektromechanischer Bremsaktuator (10) für eine Bremse eines Fahrzeugs (100), insbesondere für eine Nutzfahrzeug-Scheibenbremse (1), mit
- einem im Wesentlichen translatorisch bewegbaren Bremsstößel (14) zum Übertragen einer Druckkraft (F) in Richtung eines Bremsbelags (6, 6'),
- einem Antriebsmittel (16), das dazu eingerichtet ist, eine Antriebsbewegung (A), vorzugsweise eine rotatorische Antriebsbewegung, zu erzeugen, und
- einem Koppelgetriebe (18), welches das Antriebsmittel (16) und den Bremsstößel (14) miteinander wirkverbindet und dazu eingerichtet ist, die Antriebsbewegung (A) des Antriebsmittels (16) in eine Verstellbewegung (B) des Bremsstößels (14) zu wandeln,
**dadurch gekennzeichnet, dass** das Koppelgetriebe (18) ein mit dem Bremsstößel (14) in Anlage stehendes Koppelglied (38) aufweist, das entlang mindestens einer Kurvenbahn (40, 60) beweglich geführt und dazu eingerichtet ist, die auf das Koppelglied (38) wirkende Antriebsbewegung (A) mit einer im Wesentlichen gleichmäßigen Antriebsgeschwindigkeit (A') in die Verstellbewegung (B) des Bremsstößels (14) mit einer abschnittsweise ungleichmäßigen Verstellgeschwindigkeit (B') zu wandeln.

2. Elektromechanischer Bremsaktuator nach Anspruch 1,
**dadurch gekennzeichnet, dass** die Kurvenbahn (40) mehrere Bahnabschnitte (42, 42', 42") aufweist, welche jeweils unterschiedliche Übersetzungsverhältnisse der Antriebsbewegung (A) des Koppelglieds (38) in die Verstellbewegung (B) des Bremsstößels (14) definieren.

3. Elektromechanischer Bremsaktuator nach 2,
**dadurch gekennzeichnet, dass** das Koppelgetriebe (18) entlang wenigstens eines Bahnabschnitts (42) ein Übersetzungsverhältnis (i) von der Antriebsbewegung (A) des Koppelglieds (38) zur Verstellbewegung (B) des Bremsstößels (14) aufweist, welches kleiner 1 ist.

4. Elektromechanischer Bremsaktuator nach Anspruch 2 oder 3,
**dadurch gekennzeichnet, dass** das Koppelgetriebe (18) entlang wenigstens eines Bahnabschnitts (42') ein Übersetzungsverhältnis (i) von der Antriebsbewegung (A) des Koppelglieds (38) zur Verstellbewegung (B) des Bremsstößels (14) aufweist, welches im Wesentlichen gleich 1 ist.

5. Elektromechanischer Bremsaktuator nach einem der Ansprüche 2 bis 4,
**dadurch gekennzeichnet, dass** das Koppelgetriebe (18) entlang wenigstens eines Bahnabschnitts (42") ein Übersetzungsverhältnis (i) von der Antriebsbewegung (A) des Koppelglieds (38) zur Verstellbewegung (B) des Bremsstößels (14) aufweist, welches größer 1 ist.

6. Elektromechanischer Bremsaktuator nach einem der Ansprüche 1 bis 5,
**dadurch gekennzeichnet, dass** das Koppelglied (38) ein Übertragungselement (46) aufweist, wobei das Koppelglied (38) entlang eines Abschnitts seiner Erstreckung mittels eines Drehlagers (48) schwenkbeweglich mit dem Koppelgetriebe (18) verbunden ist, und in einem vorgegebenen Abstand zum Drehlager (48) entlang der Kurvenbahn (40) geführt ist.

7. Elektromechanischer Bremsaktuator nach einem der vorstehenden Ansprüche, **dadurch gekennzeichnet, dass** das Koppelglied (38) an einem Ende (52) entlang der Kurvenbahn (40) geführt und mit dem entgegengesetzten Ende (54) mit dem Bremsstößel (14) gekoppelt ist.

8. Elektromechanischer Bremsaktuator nach Anspruch 7,
**dadurch gekennzeichnet, dass** das Koppelglied (38) mit seinem mit dem Bremsstößel (14) gekoppelten Ende (54) entlang einer weiteren Kurvenbahn (60) geführt ist.

9. Elektromechanischer Bremsaktuator nach einem der vorstehenden Ansprüche, **dadurch gekennzeichnet, dass** das Koppelgetriebe (18) dazu eingerichtet ist, eine Wandlung von einer rotatorischen Bewegung zu einer translatorischen Bewegung vorzunehmen, vorzugsweise mittels eines Kugel-Gewindetriebs (20), welcher eine drehbar gelagerte Gewindespindel (22) und eine entlang der Gewindespindel (22) beweglich geführte Gewindemutter (24) aufweist, wobei das Koppelglied (38) schwenkbar an der Gewindemutter (24) gelagert ist.

10. Elektromechanischer Bremsaktuator nach Anspruch 9,
**dadurch gekennzeichnet, dass** das Antriebsmittel (16), vorzugsweise ein Elektromotor (26), eine Drehachse (28) aufweist, welche zur Längsachse (30) der Gewindespindel (22) parallel ausgerichtet ist, und wobei das Antriebsmittel (16) mit der Gewindespindel (22) mittels mehrerer Stirnräder (32, 32') drehgebend gekoppelt ist.

11. Elektromechanischer Bremsaktuator nach einem der vorstehenden Ansprüche, **dadurch gekennzeichnet, dass** dem Antriebsmittel (16) oder dem Koppelgetriebe (18) eine Messeinrichtung (36) zum Erfassen der mittels des Antriebsmittels (16) erzeugten Stößelkraft zugeordnet ist.

12. Elektromechanischer Bremsaktuator nach einem der vorstehenden Ansprüche, **dadurch gekennzeichnet, dass** der Bremsstößel (14), bezogen auf seine Längsachse (L), in seiner Neigung beweglich zum Koppelgetriebe (18) aufgenommen ist.

13. Scheibenbremse (1), insbesondere Nutzfahrzeug-Scheibenbremse, mit
- einer Bremsscheibe (2),
- einem Bremssattel (4),
- mindestens einem am Bremssattel (4) beweglich aufgenommenen Bremsbelag (6, 6') zum Erzeugen einer Bremswirkung mittels Andrücken an die Bremsscheibe (2),
- einem schwenkbar gelagerten Bremshebel (12) zum Andrücken des mindestens einen Bremsbelags (6, 6') an die Bremsscheibe (2), und
- einem elektromagnetischen Bremsaktuator (10), der mit dem Bremssattel (4) gekoppelt und dazu eingerichtet ist, eine Verstellbewegung des Bremshebels (12) zu bewirken,
**dadurch gekennzeichnet, dass** der elektromechanische Bremsaktuator (10) nach einem der vorstehenden Ansprüche ausgebildet ist.

14. Scheibenbremse (100) nach Anspruch 13,
**dadurch gekennzeichnet, dass** der Bremsstößel (14) des Bremsaktuators (10), vorzugsweise unmittelbar, mit dem am Bremssattel (4) beweglich aufgenommenen Bremshebel (12) gekoppelt ist.

15. Fahrzeug (100), insbesondere Nutzfahrzeug (102), mit einem Bremsaktuator (10) nach einem der vorstehenden Ansprüche 1 bis 11 oder einer Scheibenbremse (1) nach Anspruch 12 oder 13.
